# EUROPEAN PATENT SPECIFICATION

(11) **EP 1 752 850 B1**
(45) Date of publication and mention of the grant of the patent: **03.09.2014**
(21) Application number: 06253927.5
(22) Date of filing: 27.07.2006
(51) Int. Cl.: G05D 1/02

(54) **Automatic guided vehicle**
Automatisch geführtes Fahrzeug
Véhicule à guidage automatique

(30) Priority: 02.08.2005 JP 2005224537
(43) Date of publication of application: 14.02.2007
(73) Proprietor: Ricoh Company, Ltd., Tokyo 143-8555 (JP); Ricoh UK Products Limited, Telford, Shropshire TF2 9NS (GB)
(72) Inventor: Smith, Mark, Telford TF2 9NS (GB); Minifie, Richard, Telford TF2 9NS (GB); Kawase, Tsutomu, c/o Ricoh Company, Ltd., Tokyo 143-8555 (JP)
(74) Representative: Lamb, Martin John Carstairs

(56) References cited:
- WO-A1-98/31583
- JP-A- 7 081 301
- JP-A- 63 069 002
- US-A1- 2001 028 316
- US-B1- 6 201 605
- R Siegwart: "introduction to autonomous mobile robots", , 1 January 2004 (2004-01-01), XP055054850, Massachusetts ISBN: 978-0-26-219502-7 Retrieved from the Internet: URL:http://www.ee.ui.ac.id/muis/course_fil e/robotics/Introduction_to_Autonomous_Mobi le_Robots.pdf [retrieved on 2013-02-28]

## Description

The present invention relates to an automatic guided vehicle on which an operator is not boarded. More particularly, the invention relates to an automatic guided vehicle on which articles or the like are loaded and which moves along a predetermined transporting route.

Various automatic guided vehicles have been used for example in an automobile factory, a manufacturing plant of office-automation (OA) equipments, semiconductors, etc., and so on, in order to transport components, products or the like. Such an automatic guided vehicle includes a body provided with a table fur mounting goods thereon, and a traveling system for moving the body.

The traveling system typically includes a battery as an energy source for driving, an electric motor for driving which rotates by the battery, drive wheels rotated by the electric motor for driving, an electric motor for steering, driven wheels, and a drive control unit including a control circuit which controls the electric motor for driving, the electric motor for steering and so on.

The drive control unit is generally structured by a control portion including a microprocessor, an interface circuit, and so on, and a drive portion including an relay circuit which controls electricity supply relative to the electric motor for driving and the electric motor for steering in response to a control signal outputted from the control portion, and so on.

As means for guiding the automatic guided vehicle in order to establish unattended traveling, guide means such as a guiding line, a magnetic tape, a reflection tape or the like is utilized and disposed in a predetermined transport zone. The automatic guided vehicle is provided with a guide detecting means such as a guide sensor or the like for detecting the guide means. The automatic guided vehicle is thus structured to automatically transport objects in the predetermined transport zone according to an automatic operation program of the drive control unit, while detecting the guide means by the guide detecting means.

A number of methods have been proposed as the above-described traveling system of the automatic guided vehicle, as disclosed in the following bulletins for reference.

JP-H09-301155A discloses an unattended carrier having at least three wheels each of those is structured to be possible to control the steering thereof independently, and which are arranged in a triangular configuration. The two of the three wheels are drive wheels independently driven and controlled, and other one of the three wheels is a driven wheel structured to be possible to control its steering, and the driven wheel is provided with a brake.

JP-H08-34245A discloses an unattended carrier in which a horizontal rotation member is provided on a body through a vertical support shaft. A horizontal support shaft which faces forward and backward directions of the body is provided on the horizontal rotation member, and a motor support member is attached to the horizontal support shaft. This bulletin further discloses to mount a pair of right and left drive wheels and a motor to the motor support member. Thereby, a follow-up property of the drive wheels for a road surface is increased to eliminate a loss of power utmost.

JP2002-220048A also discloses an unattended carrier, in which a pair of right and left drive wheels fitted with motors is located in the center of a body frame, and which is rotatable in both directions independently and their heights are adjustable in fine motion. Casters capable of turning are attached to four corners, front and rear, of the body frame. Wheels of the casters are arranged capable of elevating and lowering, and are capable of grounding in such a way as pressed to a floor surface side by resilient pieces. Hence, the unattended carrier of the JP2002-220048A intends to stabilize running of the unattended carrier in terms of prevention of swinging of the body thereof to the left and right when the carrier is running straight forward.

Japanese utility model publication No. H01-120213A bulletin discloses an unattended carrier in which a body is supported by one drive wheel, and a pair of driven wheels each structured by a caster. The drive wheel together with a drive motor constitutes a drive wheel unit, and the drive wheel unit is horizontally rotated to perform the steering.

JP-H02-51709A discloses a control method for operation of an unattended carrier. The unattended carrier disclosed in this bulletin is structured by a pair of right and left drive wheels and driven-drive wheels (casters) in which directions thereof are fixed. The steering is established by a difference in rotation speed between the right drive wheel and the left drive wheel.

JP-H07-81301A discloses a body support device for an automatic guided vehicle, which uses two to four spherical wheels. The automatic guided vehicle of the JP-H07-81301A bulletin structures wheels other than drive wheels by the spherical wheels so as to easily absorb an impact from a road surface and to ensure running stability.

Finally, JP2003-233421A discloses an unattended carrier in which front wheels provided at right and left sides are set as steering wheels having a wider space than a width of a guide zone. Rear wheels provided at the right and left sides are set as drive wheels having a wider space than the width of the guide zone. A difference in rotation speed between the right and left drive wheels is provided in accordance with steering angles of the steering wheels. Thereby, a tracking property to the guide zone is increased, and damaging of the guide zone is prevented.

In each of the carriers disclosed in the above-described bulletins, however, there are disadvantages that a structure is complicated, and durability is low since weight is applied to shafts of the drive wheels, and hence, a frequent maintenance is necessary, when the wheels of the unattended carrier are structured by the casters. In addition, the body is swung from side to side at the time of turning since a point receiving a load and a point as the center of turning are different, and thus stability deteriorates.

In order to solve those disadvantages, the conventional technology including the inventions disclosed in the above-described bulletins reduces the swing of the body by making control of the motor smooth and improving a response of the control. However, this likely to cause reduced turning performance at a corner of the transport zone having a sharp angle, or likely to be deviated from the guide means. In addition, a loss of power is generated at the corner or a turning radius becomes large if a degree of freedom of the turning of the casters is limited to obtain the stability. In particular, because a run-up (or running start) for establishing a driven-movement of the casters is necessary when the casters are to be turned around, the turning radius is enlarged.

Also, when the caster encounters a gap in the road surface, the caster is likely to be held up and be stuck in the gap or likely to be derailed from a path. When a diameter of each of the casters is increased to prevent such problems incurred by the gap, however, further problems occur that a distance required for the run-up, an amount of movement of the center of gravity and so on are increased, since a distance of alienation between the point which receives the load and the point as the center of turning is increased.

Attention is drawn to the disclosures of R Siegwart : "introduction to autonomous mobile robots", January 2004, XP055054850, Massachusetts; WO 98/31583 and JP 62067002.

The present invention has been made in view of the above-described problems, and therefore, at least one object of the present invention is to provide an automatic guided vehicle capable of reducing a burden on a driving system caused by a weight load, a drive load and so on, which requires little maintenance, and is possible to stably go around a curve even when heavy goods or articles having the disproportionate center of gravity are mounted thereon.

In accordance with the invention, this object is accomplished by means of the automatic guided vehicle having the features of claim 1. Advantages developments of the automatic guided vehicle of the invention can be seen from the dependent claims.

More specifically; to achieve these and other advantages and in accordance with the purpose of the invention, as cmbodied and broadly described herein, the invention provides an automatic guided vehicle, according to claim 1.

Accordingly, the automatic guided vehicle according to the present invention at least has the following advantageous:
1. At least one of the support wheels which receive the load of the body comprises the spherical wheel capable of freely changing its direction of rolling. Therefore, a point receiving the load and a point as the center of rotation coincide with each other even when a diameter of the spherical wheel is increased. In addition, since the direction of rolling of the spherical wheel is freely changeable, it is possible to stably turn even if there is no distance for run-up in a case when the automatic guided vehicle travels along a curve or turns around on the spot.
2. The amount of rotation of the spherical wheel is measured optically by the measurement means and the measurement means is in non-contact with the spherical wheel when the amount of rotation of the spherical wheel is read. Therefore, it is possible to maintain a distance between the surface to be measured of the spherical wheel and the measurement means at constant. In addition, since there is no generation of a slip caused by attachment of dust for example, which may be caused in a mechanical type, it is possible to accurately measure the amount of rotation of the spherical wheel.
3. It is possible to freely change a direction of rotation and an angle of rotation by setting a center part of a bottom part of the body as the center, or selecting a desired portion of the body as the center of rotation.
4. A vibration of the steering wheel unit is not transferred to the body of the automatic guided vehicle. Therefore, it is possible to reduce a loss of rotation of the automatic guided vehicle utmost when the automatic guided vehicle rotates, and also to adjust such that the steering wheel unit and the body are rotated integrally by stopping a state in which the steering wheel unit and the body are freely rotatable.
5. The amount of movement of the spherical wheel is detected by the measurement means of the spherical wheels arranged in the corners of the body, which are on at least one diagonal line of the body. Therefore, it is possible to enhance accuracy of measurement of the amount of rotation of the spherical wheel at the time when the body turns for example, and to promptly perform feedback operation of the steering wheels with regard to a change in posture of the automatic guided vehicle.
6. The auxiliary spherical wheel is mounted to the steering wheel unit. Because the auxiliary spherical wheel supports a great stress acts upon the steering wheel unit and its attaching portion to the body when driving force of a forward movement or a backward movement is applied on the steering wheel unit, motion of the steering wheel unit is suppressed. Accordingly, damage on a bearing is avoided, and a change in a position of a guiding line for tracking and a position of a sensor arranged to the steering wheel unit, or a change in a distance therebetween, can be prevented.

It is to be understood that both the foregoing general description and the following detailed description are exemplary, and are intended to provide further explanation of the invention as claimed.

In the following, the present invention is explained in greater detail by means of several exemplary preferred embodiments thereof in conjunction with the accompanying drawings. Note that the accompanying drawings are included to provide a further understanding of the invention, and are incorporated in and constitute a part of this description. The drawings illustrate embodiments of the invention and, together with the description, serve to explain the principles of the invention.
FIG. 1 is a perspective view showing a general structure of a frame and a transporting means of an automatic guided vehicle according to an embodiment of the invention.
FIG. 2 is a perspective view showing an arranged state of spherical wheels, steering wheels and a controller of the automatic guided vehicle of FIG. 1.
FIG. 3 is a cross-sectional view showing a structure of the spherical wheel according to an embodiment of the invention.
FIG 4 is a perspective view showing an arranged state of the spherical wheels, the steering wheels and the controller according to another embodiment of the invention.
FIG. 5 is a view showing an arranged state of a drive unit and the spherical wheels disposed in a lower part of a body.
FIG. 6 is an explanatory view showing a state in which a structure of the drive unit is seen from a lower side.
FIG. 7 is a bottom view showing a state in which the body of the automatic guided vehicle is seen from the lower side according to another embodiment mentioned above.
FIG. 8 is a block circuit diagram showing circuits connected with a microprocessor of the controller.
FIG. 9 is a flowchart of processing performed at the time of starting traveling of the automatic guided vehicle.
FIG. 10 is a flowchart of processing performed at the time of carrying out a deceleration process.
FIG. 11 is a flowchart of processing performed at the time of turning of the automatic guided vehicle at 90 degrees to the right.
FIG. 12 is a view showing a state in which turning at 180 degrees to the right is carried out.
FIG. 13 is a flowchart of processing at the time of carrying out a diverging process.
FIG. 14 is a view showing a change in posture of the body when the automatic guided vehicle is at a diverging part of a guiding line.
FIG. 15 is a view showing a state in which a structure, which an auxiliary spherical wheel is attached to the drive unit, is seen from the lower side.
FIG. 16 is a view showing a structure in which the auxiliary spherical wheel is attached to the drive unit in such a manner as to be departed from a symmetrical center line.
FIG. 17 is a view showing the drive unit attached with the auxiliary spherical wheel, seen from an upper side.

Reference will now be made in detail to the present preferred embodiments of an automatic guided vehicle according to the present invention, examples of which are illustrated in the accompanying drawings. Wherever possible, the same reference numbers are used in the drawings and the description to refer to the same or like parts. The scope of the present invention, however, is not limited to these embodiments. Within the scope of the present invention, any structure and material described below can be appropriately modified.

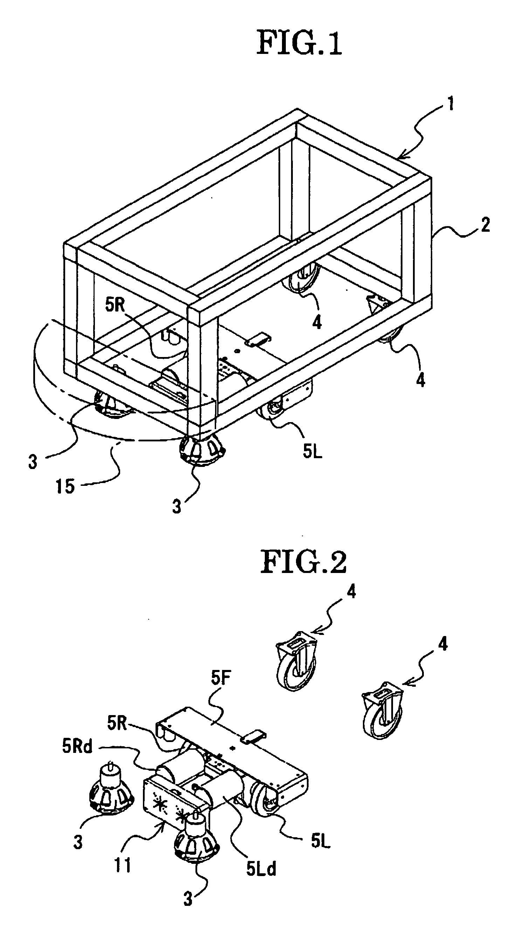

FIG. 1. shows a principal structure of an automatic guided vehicle according to an embodiment of the invention. The automatic guided vehicle 1 is provided with a frame 2, which structures a framework of a body and is formed substantially in a rectangular solid shape, such that objects are mounted thereon and delivered unattendedly. Thus, the automatic guided vehicle 1 constitutes a so-called line-tracer robot. Note that any other shape other than the rectangular solid can also be employed for the shape of the frame 2, as long as the objects can be securely delivered, such as square.

Referring to FIG. 2, a lower part of the frame 2 of the body is arranged with a pair of spherical wheels 3 each of those is capable of freely changing its direction of rotation, a pair of wheels 4 in which a direction of rotation thereof is fixed, respectivcly, and a pair of steering wheels 5R and 5L in which an axis of rotation is set in a same direction, respectively.

In the automatic guided vehicle 1, the pair of spherical wheels 3 is disposed in a front part and both sides of the automatic guided vehicle 1, whereas the pair of wheels 4 is disposed in a rear part and both sides of the automatic guided vehicle 1. In the present preferred embodiment, the pair of spherical wheels 3 and the pair of wheels 4 support most of the weight of the automatic guided vehicle 1 and delivery goods, and the steering wheels 5R and 5L mainly rotate on a floor surface in order to set a direction of traveling.

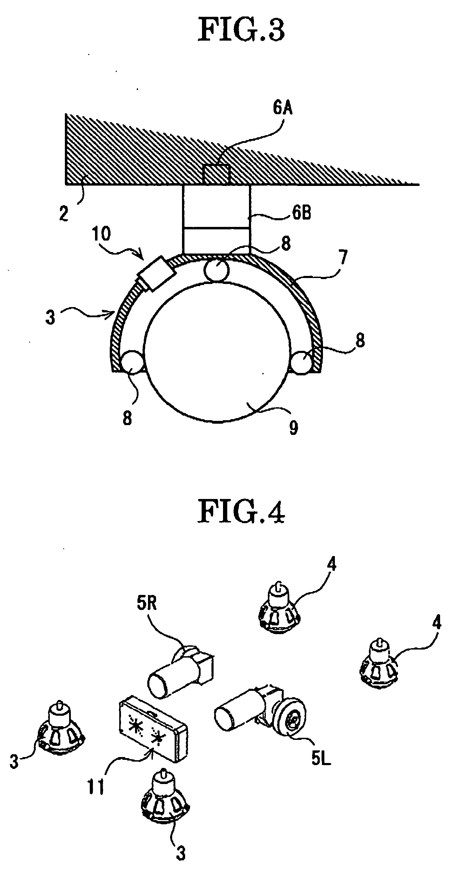

FIG. 3 shows a structure of the spherical wheel 3, which includes a ball 9. The spherical wheel 3 is possible to directly transmit a load applied to the ball 9 to the floor surface since a point receiving the load is located on upper and lower apexes of the ball 9, even when a diameter of the ball 9 is increased. In addition, a direction of rolling of the ball 9 is unrestricted. Therefore, it is possible to change directions of movement of the spherical wheel 3 without any run-up at the time of turning of the body.

The spherical wheel 3 is provided with a screw portion 6A to be fixed to the frame 2 of the body. The screw portion 6A is adapted to pass through a threaded screw hole (not shown) of the frame 2 and preferably a screw nut is fixed thereto through a washer. A cylindrical base 6B including the screw portion 6A is attached with a housing 7. The housing 7 is structured by a semispherical member having a bowl-like configuration preferably made of steel although it is not limited thereto, and the inside of the housing 7 is provided with a plurality of small-diameter bearings 8 each retained to the housing 7 in such a manner that displacement is not occurred. In the preferred embodiment, a total of three bearings 8 are disposed in the housing 7 at positions in the housing 7 forming apexes of an equilateral triangle in a horizontal plane along the floor surface, in which one of the three bearings 8 is arranged in the zenith thereof. The ball 9, which is made of plastic although it is not limited thereto, is thus retained inside of the housing 7 through the retention of the total of three bearings 8. Accordingly, smooth rolling of the ball 9 by the bearings 8 and consequent efficient driving of the automatic guided vehicle 1 are attained.

An inner wall of the housing 7 is provided with a spherical wheel sensor 10 which irradiates light toward an outer circumferential surface of the ball 9 and reads the light reflected from the ball 9. The spherical wheel sensor 10 includes a light-emitting diode (LED) for irradiating infrared light onto the surface of the ball 9, an image sensor for receiving the light reflected from the ball 9, and a lens system for condensing the reflected light to the image sensor.

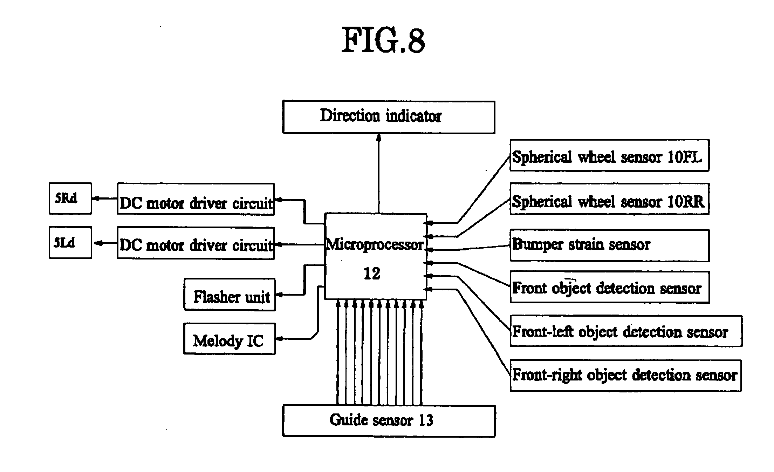

Referring to FIG. 8, an output of the image sensor of the spherical wheel sensor 10 is transmitted to a microprocessor 12 included in a controller 11, and thereby, an amount of rotation and a rotation direction of the spherical wheel 3 is calculated by the controller 11, based on the rotation of the ball 9.

More specifically, the spherical wheel sensor 10 irradiates pulsed light of the infrared light relative to the ball 9, and reads the reflected light from the surface of the ball 9 with the image sensor. The microprocessor 12 shown in FIG. 8 then compares images which are before and after timewise to measure a distance of movement and a moving direction in the same part per predetermined time, and thereby, calculates the distance of movement and the moving direction of the ball 9. Here, since positions of the spherical wheel sensor 10 and the ball 9 are determined, it is possible to accurately measure an amount of movement of the images read by the image sensor when the ball 9 is rotated.

According to an embodiment of the invention, the surface of the ball 9 has black and white coloured irregular stripe patterns, or has black and white irregular dots, in order to easily obtain the images of the surface of the ball 9. Also, in one embodiment, the surface of the ball 9 is rough-surfaced. Hence, the spherical wheel sensor 10 is possible to easily detect the rotation of the ball 9 by forming the obvious patterns or the rough surface on the surface of the ball 9, and the microprocessor 12 is thereby possible to calculate the amount of rotation and the rotation direction of the ball 9 more accurately. Meanwhile, a bearing plate of each of the wheels 4 is attached to the lower part of the frame 2.

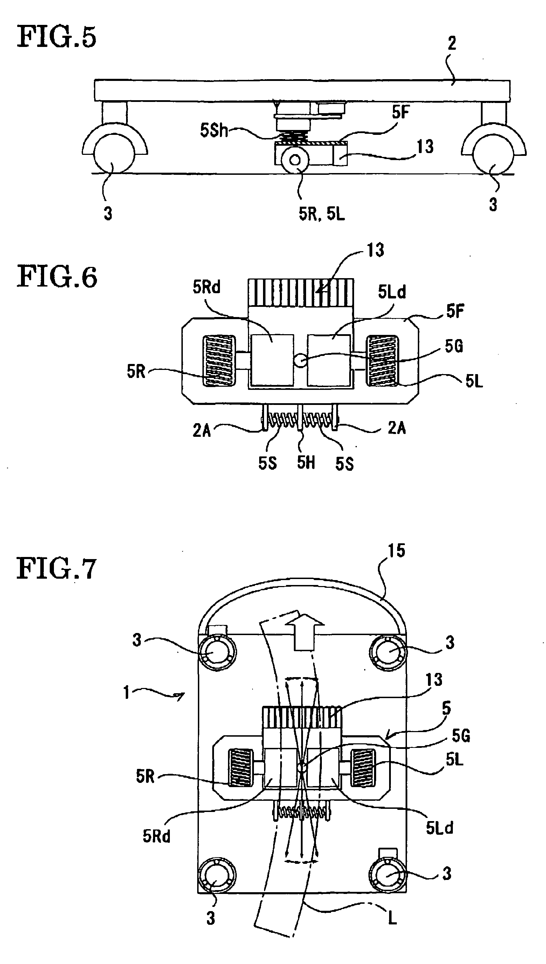

Referring to FIG. 6, a frame 5F of a drive unit 5 is provided with the steering wheels 5R and 5L, direct current (DC) motors 5Rd and 5Ld for driving the steering wheels 5R and 5L, respectively, and a guide sensor 13 for observing a guiding line L. The frame 5F is attached to a bottom part of the body in such a manner as to freely rotatable around a vertical axis thereof. In the present preferred embodiment, the frame 5F is allowed to rotate sideways at, for example but not limited to, about 10 degrees around a central axis 5G as shown in FIC. 7. Furthermore, the frame 5F is formed with a protrusion 5H, and the bottom part of the body is formed with a pair of protrusions 2A in such a manner that the protrusions 2A are positioned at both sides of the protrusion 5H. A pair of springs 5S as a first impact absorption means according to the preferred embodiment is provided between the protrusion 5H, located in the middle of the pair of protrusions 2A, and each of the protrusions 2A, for restricting a facing direction of the frame 5F, such that a center line of the frame 5F faces straightforward after the rotation. Each of the springs 5S absorbs misalignment between the drive unit 5 and the body when the body is turned, so as to avoid swinging.

A coiled spring 5Sh for impact absorption as a second impact absorption means according to the preferred embodiment is mounted between an upper part of the frame 5F and the bottom part of the body. The coiled spring 5Sh absorbs vertical oscillation of the body at the time of rotation by the steering wheels 5R and 5L. In the frame 5F according to the present preferred embodiment, the pair of steering wheels 5R and 5L are disposed sideways of the body in the center part and slightly front of the body. The steering wheels 5R and 5L include the DC motors 5Rd and 5Ld each rotate by a battery for example, and reduction gear mechanisms which collaborate with rotational shafts of the DC motors 5Rd and 5Ld, respectively.

The steering wheels 5R and 5L are attached to rotational shafts of last stage gears of the reduction gear mechanisms, respectively. In the present preferred embodiment, the pair of steering wheels 5R and 5L is capable of rotating at a constant speed in the same direction to each other, is also capable of rotating by adapting either one of the steering wheels 5R and 5L to rotate faster than the other, and is further capable of rotating by adapting one of the steering wheels 5R and 5L to rotate in a forward direction and adapting the other one of the steering wheels 5R and 5L to rotate in a reverse direction, in accordance with control of power supplying relative to the respective DC motors 5Rd and 5Ld.

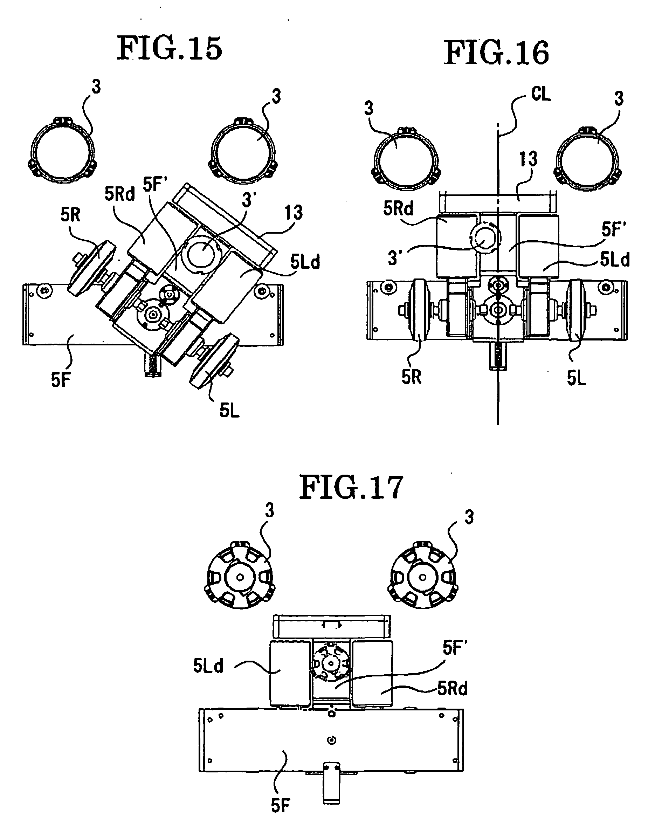

FIGs. 15 to 17 each show the drive unit 5, in which an auxiliary spherical wheel 3' is attached to a movable-side frame 5F' of the drive unit 5, according to the preferred embodiment. The auxiliary spherical wheel 3' is mounted to the movable-side frame 5F' of the drive unit 5, so that a burden at the time of turning of the automatic guided vehicle 1 imposed on an attaching portion, which couples the movable-side frame 5F' of the drive unit 5 and the body, can be reduced, and wear of the attaching portion, damage of a bearing and so on can also be avoided. Also, it is possible to avoid sensitivity of the guide sensor 13 to be changed due to a change in a distance between the guiding line L and the guide sensor 13, a change in their positions or the like caused by the movement at the time of turning.

In the preferred embodiment of the invention, the auxiliary spherical wheel 3' is attached to the drive unit 5 in such a manner that the auxiliary spherical wheel 3' is positioned on a symmetrical center line CL of the movable-side frame 5F', as shown in FIG. 16. Here, in one embodiment of the invention, it is more advantageous if the auxiliary spherical wheel 3' is disposed at a position slightly deviated from the symmetrical center line CL to the right or left. According to this structure, because the auxiliary spherical wheel 3' is positioned slightly away to the right or left from the symmetrical center line CL, the auxiliary spherical wheel 3' is prevented from following the same path when the drive unit 5 moves along the guiding line L and the automatic guided vehicle 1 travels back and forth. Hence, any taint or damage to the guiding line L is reduced utmost, and generation of a read error and so on at the time when the guide sensor 13 reads the guiding line L is reduced minimum.

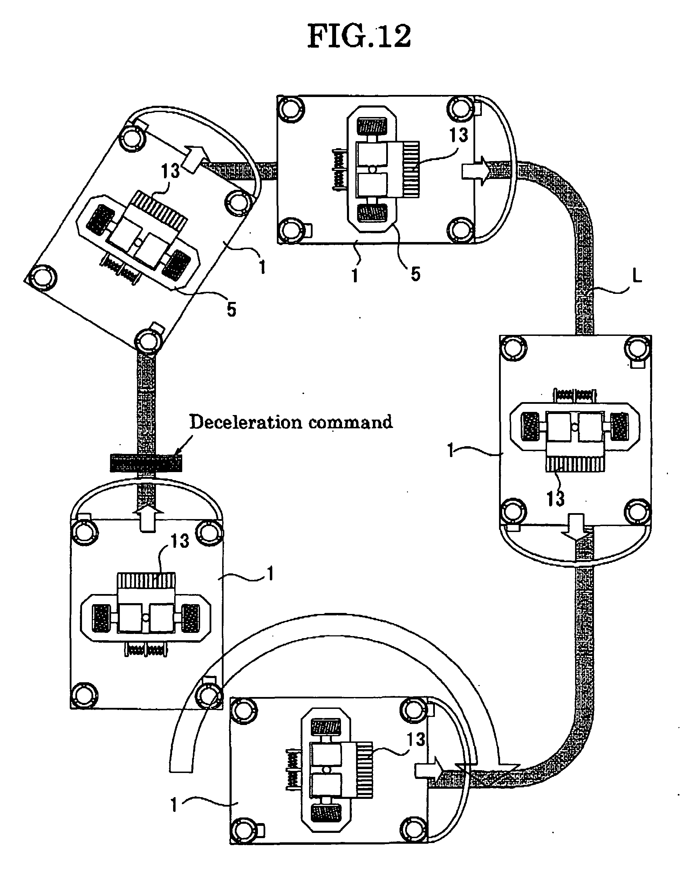

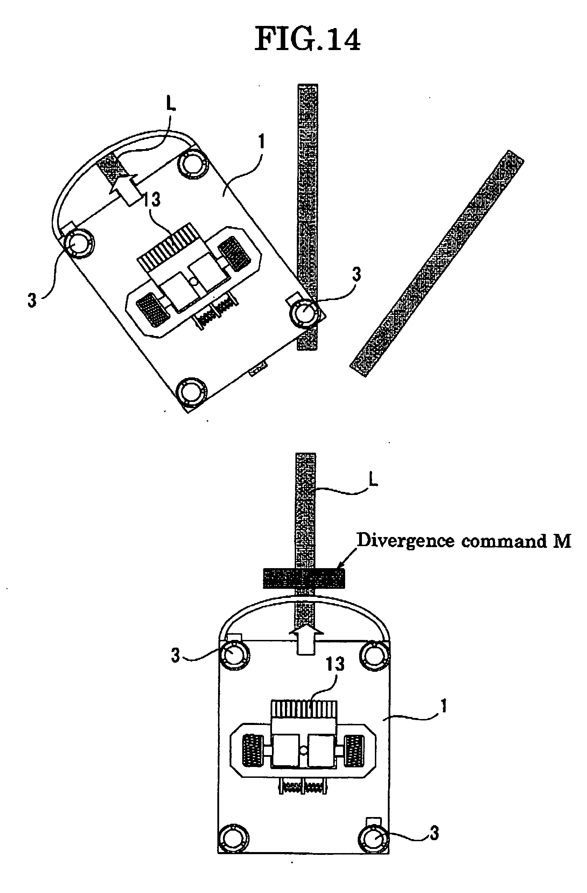

FIGs. 4 and 7 each show the automatic guided vehicle, in which the spherical wheels 3 are provided at four corners of the body, according to an embodiment of the invention. In the present embodiment, the pair of wheels 4 disposed in the rear part and both sides of the automatic guided vehicle 1 also employs the spherical wheel similar to the spherical wheel 3 described above. FIG. 4 also illustrates the automatic guided vehicle, in which a distance of alienation between the pair of steering wheels 5R and 5L is set large. The spherical wheels 3 may be disposed on the bottom part of the body diagonally in front and in the rear, as shown in FIGs. 12 and 14.

In the preferred embodiment of the invention, the drive unit 5 is provided with the guide sensor 13 for reading the guiding line L, which directs the automatic guided vehicle 1. The guide sensor 13 is connected with the microprocessor 12 of the controller 11, and includes a light-emitting element and a light-receiving element each structuring a reflective photo-interrupter. The guide sensor 13 irradiates light from the light-emitting element to the floor surface on which the guiding line L is illustrated, and detects the light reflected from the floor surface with the light-receiving element. In the preferred embodiment, the plurality of photo-interrupters of the guide sensor 13 is provided in a width direction of the guiding line L. In one embodiment, a plurality of magnetic sensors is arranged to the drive unit 5 as the guide sensor 13 instead of the reflective photo-interrupter, and a magnetic tape is used for the guiding line L, by which the similar effect can also be obtained.

The controller 11 includes the microprocessor 12 which controls the DC motors 5Rd and 5Ld of the pair of steering wheels 5R and 5L, an interface circuit used for transmission and receiving of data, a storage element, a peripheral circuitry such as a communication circuit and so on, a melody integrated circuit (IC) which generates sounds in accordance with operation, object detection sensors provided in a front-central part, a front-left part and a front-right part for example of a bumper 15 for detecting objects, a strain sensor of the bumper 15, a direction indicator, a flasher unit, and a power source circuit for supplying electric power to these circuits and elements, for example.

More specifically, as shown in FIG. 8, the microprocessor 12 of the preferred embodiment is connected with the guide sensor 13 of the drive unit 5, the spherical wheel sensors 10FL and 10RR (spherical wheel sensor 10 described above arranged in a front-left side and a rear-right side of the body), the interface circuit, the storage element, the peripheral circuitry such as the communication circuit and so on, the melody IC, the object detection sensors (provided in the front-central part, the front-left part and the front-right part of the bumper 15 according to the preferred embodiment), the bumper strain sensor, the direction indicator, and the flasher unit (a revolving flasher for example). A storage circuit included in the microprocessor 12 stores therein data and programs necessary for traveling, delivery and so on, such as a traveling program for controlling the traveling of the automatic guided vehicle 1, and other programs.

The guiding line L, which the automatic guided vehicle 1 trails, is generally applied with a reflection process or coated with black paint. Accordingly, when the automatic guided vehicle 1 traces the guiding line L, the guide sensor 13 detects boundaries between both side edges of the guiding line L and the floor surface and transmits corresponding outputs to the controller 11. The controller 11 thereby controls the DC motors 5Rd and 5Ld of the steering wheels 5R and 5L such that the body of the automatic' guided vehicle 1 moves along the guiding line L.

As shown in FIGs. 12 and 14, in the preferred embodiment, a mark representing a command such as "turn to the right (or to the left) at 90 degrees", "turn to the right (or to the left) at 180 degrees", "stop" and "reduce speed" is indicated on the guiding line L, in order for directing the automatic guided vehicle 1. Alternatively, in one embodiment, such a command may be determined by a width of the guiding line L, or represented by forming a barcode-like data recording portion on the guiding line L, other than indicating the command by the mark. The microprocessor 12 can judge what kind of control should be executed within a predetermined time when the guide sensor 13 has read the barcode or the like within a predetermined time by utilizing the traveling speed of the automatic guided vehicle 1, and can appropriately control the DC motors 5Rd and 5Ld of the steering wheels 5R and 5L.

Hereinafter, control of operation of the automatic guided vehicle 1 according to the traveling program according to the preferred embodiment of the invention will be described.

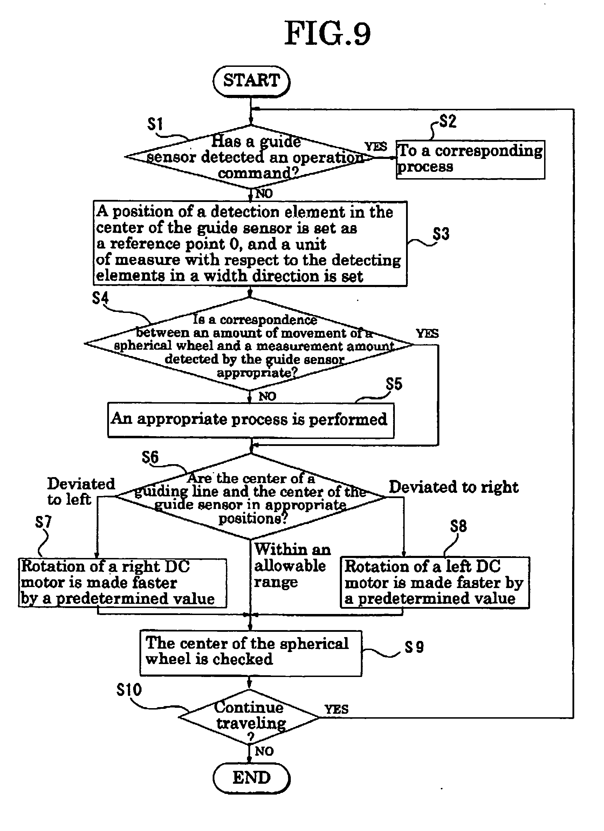

FIG. 9 shows a flow of processing when a main switch of the automatic guided vehicle 1 is turned on and the traveling program is started, according to the preferred embodiment of the invention. When the traveling program is started, whether or not a command such as "turn to the right (or to the left) at 90 degrees", "stop", "reduce speed" and so on is detected and given within a predetermined time from the guide sensor 13 is checked (step S1). In this checking, a straight line traveling mode is continued if the guide sensor 13 has not detected any command. In the checking, on the other hand, when the guide sensor 13 has detected a command, a mode corresponding to the detected command is executed (step S2). In the straight line traveling mode, after the step S1, the center of the guide sensor 13, having detection elements, in the width direction of the guiding line L is set at "0", and a displacement amount of the body in a vehicle-width direction and a unit of measure with respect to the detection elements in the width direction is set (step S3). In other words, an amount of movement of the spherical wheel 3 required to coincide the center of the guide sensor 13 in the width direction thereof with the center of the guiding line L in its width direction (referred to as predicted amount of movement) is set.

After the step S3, whether or not a correspondence between the amount of rotation (i.e. the movement) of the ball 9 and the predicted amount of movement detected by the guide sensor 13 is appropriate is judged (step S4). When it is judged that the movement of the ball 9 is larger than the predicted amount of movement detected the guide sensor 13, an appropriate process in which a unit of detection of the displacement amount of the body is decreased is performed, whereas when it is judged that the movement of the ball 9 is less than the predicted amount of movement detected by the guide sensor 13, an appropriate process in which the unit of detection of the displacement amount of the body is increased is performed (step S5).

Here, in a case in which the movement of the ball 9 is to be detected by utilizing the spherical wheel sensor 10, the pulsed light of the infrared light is irradiated from the infrared LED of the light-emitting clement, and the reflected pulsed light from the ball 9 is detected by the image sensor, as described above. In the preferred embodiment of the invention, the controller 11 calculates the movement of the surface of the ball 9 at every pulse to work out the amount of movement and the rotation direction of the ball 9, and thereby computes a direction of transporting and a transporting speed and as well as an amount of transporting of the automatic guided vehicle 1.

According to the preferred embodiment, whether the center of the guide sensor 13 coincides with the center of the guiding line L or is within an allowable range is identified by a position of the interrupter which has detected the edge of the guiding line L and a position of the interrupter which has detected the floor surface. Hence, after the step S5, judgment on whether the center of the guide sensor 13 corresponds with the center of the guiding line L or is positioned within the allowable range is performed (step S6). When it is judged that the center of the guide sensor 13 corresponds with the center of the guiding line L or is within the allowable range, the amount of rotation of each of the right and left DC motors 5Rd and 5Ld is maintained equally to continue the traveling (step S9).

When the center of the guide sensor 13 is positioned toward the right side from the center of the guiding line L to a forward traveling direction, this means that that the right steering wheel 5R is slow. Thus, the amount of rotation of the DC motor 5Rd of the slow steering wheel 5R is maintained large and the traveling is continued (step S7).

On the other hand, when the center of the guide sensor 13 is positioned toward the left side from the center of the guiding line L to the forward direction, this means that the left steering wheel 5L is slow, so that the amount of rotation of the DC motor 5Ld of the slow steering wheel 5L is maintained large and the traveling is continued (step S8).

After having checked the position of the body in the width direction of the guiding line L with the guiding sensor 13, the movement of the ball 9 of the spherical wheel 3 is detected by the spherical wheel sensor 10 (step S9), and whether or not to continue the traveling is judged (step S10). When it is judged to continue the traveling, the driving of the DC motors 5Rd and 5Ld is continued again while a result of detection from the guide sensor 13 is waited. When it is judged not to continue the traveling, the traveling program is ended.

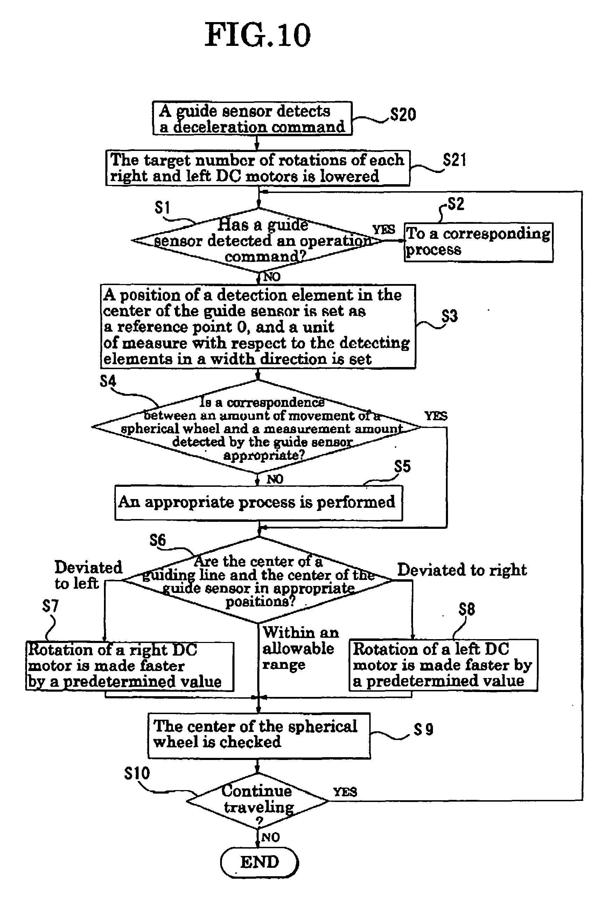

Next, a deceleration traveling mode in the straight line traveling mode will be described. FIG. 10 shows a flow of processing of the deceleration traveling mode according to the preferred embodiment of the invention. In the present preferred embodiment, the deceleration traveling is performed just before a corner or before a point of changing of direction, in order for avoiding deviation from the path, or for making a stop position accurate.

In the deceleration traveling mode, when the controller 11 has detected a deceleration command from a detection signal of the guide sensor 13 while the guide sensor 13 reads the guiding line L (step S20), the mode of the automatic guided vehicle 1 transits from the traveling mode at the normal traveling speed to the deceleration traveling mode. The controller 11 sets the target number of rotations of the right and left DC motors low in the deceleration traveling mode (step S21).

When the target number of rotations is lowered, processing similar to that of the above-described straight line traveling mode, i.e. the processing including the steps S1 to S10 mentioned above, is carried out as shown in FIG. 10. Hence, the processing after the lowering of the target number of rotations will not be described here in detail. When the guide sensor 13 does not detect other command, the straight line traveling mode is continued again. Here, in a case in which the traveling is to be carried out according to the straight line traveling mode again, the speed of the traveling is set low. When the guide sensor 13 has detected other command, a process according to the detected other command is executed.

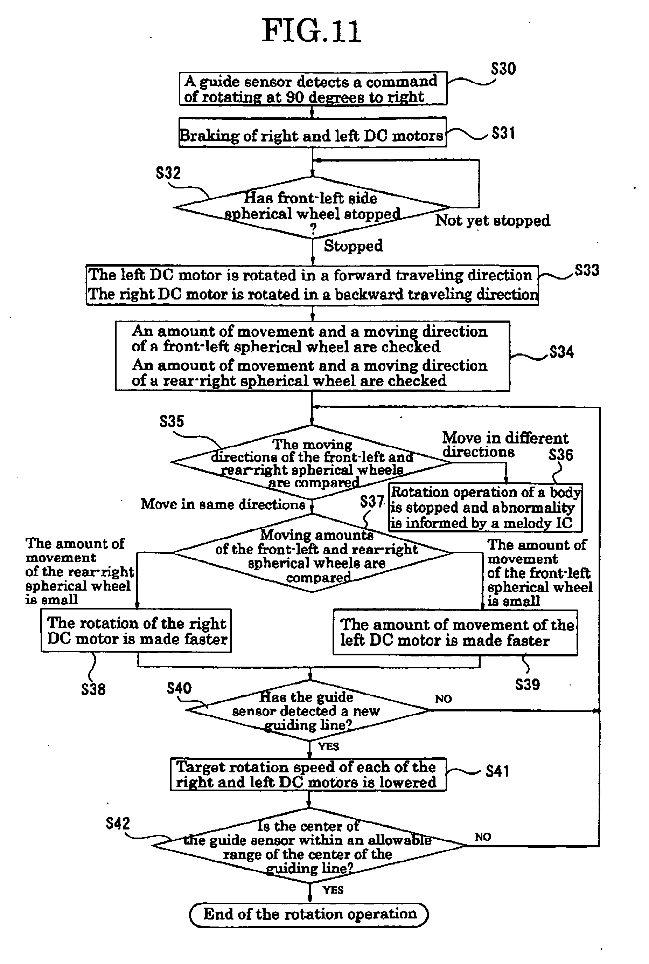

Next, operation at the time of turning of the automatic guided vehicle at 90 degrees is described. FIG. 11 shows a flow of processing when the turning at 90 degrees to the right is carried out according to the preferred embodiment of the invention. When the guide sensor 13 has read the mark or the like indicating the changing of direction on the guiding line L during when the automatic guided vehicle 1 travels with the straight line traveling mode and the controller 11 has judged that the mark or the like read by the guide sensor 13 is a command of "changing of direction at 90 degrees to the right" (step S30), the controller 11 at first brakes the right and left DC motors 5Rd and 5Ld (step S31). After the braking of the DC motors 5Rd and 5Ld, in the preferred embodiment, the moving direction and the amount of movement of the spherical wheel 3 arranged at the front-left side of the body is checked (step S32). When the spherical wheel 3 is moving in the checking of the step S32, the spherical wheel 3 is waited to be stopped. When the spherical wheel 3 is stopped, the DC motor 5Ld of the steering wheel 5L, arranged on the left to the direction of forward traveling, is rotated in the forward traveling direction, whereas the DC motor 5Rd of the steering wheel 5R, arranged on the right to the forward traveling direction, is rotated at a predetermined amount in a backward traveling direction (step S33).

After the step 533, in the preferred embodiment, the movement of the ball 9 of the spherical wheel 3, disposed at the front-left side of the body to the forward traveling direction, is detected by the spherical wheel sensor 10 while the right and left DC motors 5Rd and the 5Ld are rotated in directions opposite to each other. In addition, whilst the moving direction and the amount of movement of the spherical wheel 3 of the front-left side of the body is measured by the controller 11, the movement of the ball 9 of the spherical wheel 3, disposed at the rear-right side of the body to the forward traveling direction, is detected by the spherical wheel sensor 10, to measure the moving direction and the amount of movement of the spherical wheel 3 of the rear-right side of the body with the controller 11 (step S34).

Subsequently, in a case in which, in accordance with comparison of the moving directions of the front-left and rear-right spherical wheels 3, the moving directions thereof are deviated from predetermined directions and thus the body moves in a different direction, the rotation of each of the right and left DC motors 5Rd and the 5Ld is stopped and a sound such as melody is generated from the melody IC to inform occurrence of abnormality (step S35 and step S36).

On the other hand, in a case in which the body moves in a direction same as a predetermined direction in accordance with the comparison of the moving directions of the front-left and rear-right spherical wheels 3, the amount of movement of each of the front-left and rear-right spherical wheels 3 of the body is measured to compare the movement amounts of the front-left and rear-right spherical wheels 3 (step S37). In this comparison, when the amount of movement of the rear-right spherical wheel 3 is less than the amount of movement of the front-left spherical wheel 3, the rotation speed of the DC motor 5Rd of the steering wheel 5R is increased (step S38), whereas when the amount of movement of the front-left spherical wheel 3 is less than the amount of movement of the rear-right spherical wheel 3, the rotation sped of the DC motor 5Ld of the steering wheel 5L is increased (step S39).

In the processing mode of turning 90 degrees to the right, moreover, judgment of whether or not the guide sensor 13 has detected the new guiding line L is performed (step S40). When the new guiding line L is not detected, the processing is returned to the above-described process in which the movement amounts of the front-left and rear-right spherical wheels 3 are compared.

When the guide sensor 13 has detected the new guiding line L in the processing mode of turning 90 degrees to the right, the rotation speed of each of the DC motors 5Rd and 5Ld of the right and left steering wheels 5R and 5L is decreased to a predetermined value (step S41).

Then, whether or not the center of the guide sensor 13 coincides with the center of the guiding line L or is within the allowable range is checked (step S42). When the center of the guide sensor 13 does not coincide with the center of the guiding line L nor is within the allowable range, the processing is returned to the above-described process in which the movement amounts of the front-left and rear-right spherical wheels 3 are compared. When the center of the guide sensor 13 coincides with the center of the guiding line L or is within the allowable range, the rotation of each of the DC motors 5Rd and 5Ld of the right and left steering wheels 5R and 5L is stopped.

Note that the operation at the time of turning of the automatic guided vehicle 1 at 90 degrees in accordance with the present preferred embodiment described above, with reference to FIG. 11, is based on the case in which the automatic guided vehicle 1 is turned to the right and stops then and there. In the present preferred embodiment of the invention, the right and left in the above-described flow of processing are reversed when the automatic guided vehicle 1 is to be turned at 90 degrees to the left. In addition, when the automatic guided vehicle 1 is to be moved on in a turned direction without stopping there and then, the automatic guided vchiclc 1 proceeds along the detected guiding line L.

Referring to FIG. 12, in the preferred embodiment of the invention, in a case in which the automatic guided vehicle 1 is to be turned at 180 degrees such that the automatic guided vehicle 1 can turn around (U-turn) for example at an end portion of the guiding line L and go return therefrom, the turning angle set in the controller 11 is changed from 90 degrees to 180 degrees in the control of the movement amounts and the moving directions of the spherical wheels 3, according to the processing of turning 90 degrees to the right described above. Thereby, the guide sensor 13 is possible to detect the traveled guiding line L again when the automatic guided vehicle 1 is turned at 180 degrees, and to return to an original position by following the detected guiding line L.

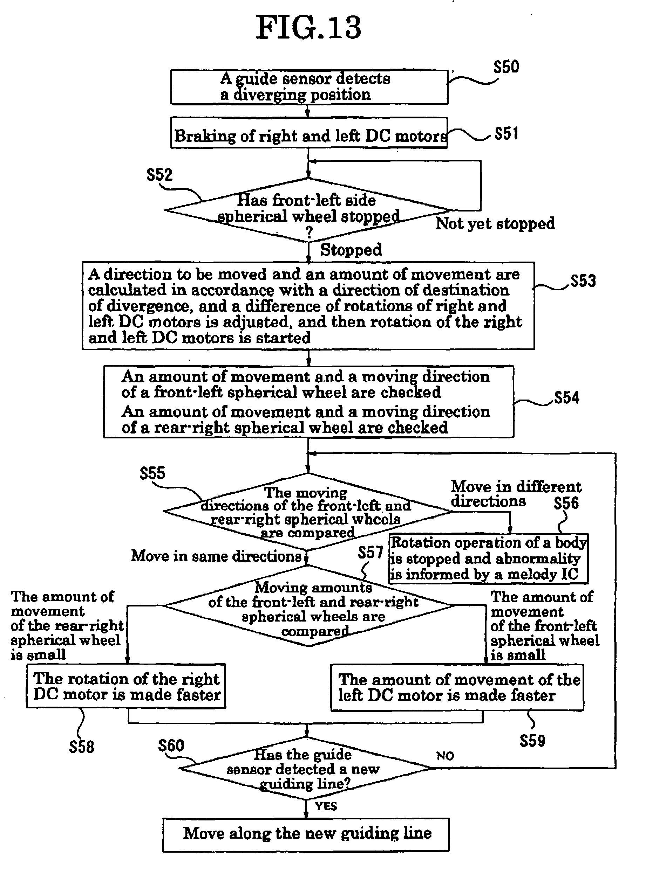

Now, operation of the automatic guided vehicle 1 in a point of the guiding line L in which the guiding line L diverges will be explained with reference to FIGs. 13 and 14. Referring to FIG. 14, a mark M, an identification sign or the like of a divergence command representing that the guiding line L is diverged is indicated on the guiding line L for example, in a case in which the guiding line L is diverged into a plurality of guiding lines L from right to left. The guide sensor 13 reads those identification means, and the controller 11 judges from the read identification means that there is a diverging portion in a coming path of the guiding line L, and performs the operation in the diverging point.

As a method of detecting and judging of the mark M or the like indicating the divergence command, in the preferred embodiment of the invention, it is judged that the diverging mark M is detected when detecting elements of the interrupters in the guide sensor 13, which are located in positions of both outsides of the guiding line L, have detected a guiding line L arranged in sideways (i.e. the mark M) together, while the automatic guided vehicle 1 travels along the guiding line L and when both of the times in which the detecting elements located in the positions of both outsides of the guiding line L have detected the guiding line L arranged in the sideways coincide mutually. In one embodiment of the invention, the mark M includes the barcode or the like for enabling the detection and the judgment by the guide sensor 13.

When the automatic guided vehicle 1 has reached the mark M at the diverging portion on the guiding line L, the guide sensor 13 reads the mark M indicating that the diverging point is near, and thereby the controller 11 determines that the automatic guided vehicle 1 has reached near the diverging point (step S50). The controller 11, having judged that the automatic guided vehicle 1 has reached the diverging point, then brakes the DC motors 5Rd and 5Ld of the steering wheels 5R and 5L (step S51). In the preferred embodiment, the braking is achieved by pulse width modulation (PWM) control of each of the DC motors 5Rd and 5Ld. After the braking of the DC motors 5Rd and 5Ld, the spherical wheel sensor 10 of the spherical wheel 3 reads the ball 9, and the controller 11 checks whether or not the spherical wheel 3 (in the preferred embodiment, the spherical wheel 3 arranged at the front-right side of the body) is moving (step S52). If the spherical wheel 3 is still moving in this checking, the spherical wheel 3 is waited until it stops.

When the spherical wheel 3 is stopped, the controller 11 decides a direction to be diverged, and calculates a direction to which the body itself should be moved and an amount of movement of the body. Subsequently, the controller 11 calculates a difference of rotations of the right and left DC motors 5Rd and 5Ld based on the calculated direction to be moved and the amount of movement, initiates the supplying of power to the right and left DC motors 5Rd and 5Ld according to a result of the calculation of the difference of rotations (step S53).

In the diverging point, the direction to be diverged is selected and decided according to where a receiving place of the delivery objects is located or where a destination of delivery is located, which has been determined when the automatic guided vehicle 1 initiates a delivery process, in order to decide which of the diverging lines should the automatic guided vehicle 1 proceed. In the preferred embodiment, the location of the receiving place of the delivery objects, the location of the destination of delivery and so on are transmitted from a delivery controller which is not shown to the controller 11 prior to the initiation of the delivery, and information transmitted from the delivery controller is updatably stored in the controller 11.

The body starts to move by the initiation of power supplying to the right and left DC motors 5Rd and 5Ld. In the present preferred embodiment, the moving direction and the amount of movement of the spherical wheel 3 at the front-left side of the body to the traveling direction are detected by the movement of the ball 9 of the front-left spherical wheel 3 (step S54). Note that FIG. 14 shows a case in which the automatic guided vehicle steers to the left in the traveling direction.

In the step S54, the movement of the ball 9 of the front-left spherical wheel 3 is detected by the spherical wheel sensor 10, and the rotation direction (moving direction) and the amount of movement per certain time of the ball 9 are calculated by the controller 11. In addition, in the step S54 according to the preferred embodiment, the moving direction and the amount of movement of the spherical wheel 3 located at the rear-right side of the body to the traveling direction are also detected by utilizing the movement of the ball 9 of the rear-right spherical wheel 3. Accordingly, each movement of the ball 9 is detected by the corresponding spherical wheel sensor 10FL or 10RR, to calculate the rotation directions and the moving amounts per certain time of the balls 9 of each of the front-left and the rear-right spherical wheels FL and RR with the controller 11.

After the amount of movement of each of the front-left and the rear-right spherical wheels FL and RR is calculated, the movement amounts and the moving directions of the front-left and the rear-right spherical wheels FL and RR are checked and compared (step S55). When the moving direction of the body at the turning of each of the front-left and the rear-right spherical wheels FL and RR is different from a targeted direction, the rotation operation of the body is stopped, and a sound such as melody is generated from the melody IC to inform the occurrence of the abnormality (step S56).

When the body moves in the target direction, the movement amounts of the front-left and the rear-right spherical wheels FL and RR are compared (step S57). In a case in which the amount of movement of the rear-right spherical wheel RR is less than the target movement amount, the rotation of the DC motor 5Rd, located right to the traveling direction, of the steering wheel 5R is increased (step S58). On the other hand, in a case in which the amount of movement of the front-left spherical wheel FL is less than the target movement amount, the rotation of the DC motor 5Ld, located left to the traveling direction, of the steering wheel 5L is increased (step S59).

After the steps S58 and S59, judgment of whether or not the guide sensor 13 has detected the new guiding line L is performed (step S60). When the new guiding line L is detected, the automatic guided vehicle 1 is moved along the detected new guiding line L (step S61). When the guide sensor 13 does not detect the new guiding line L, the processing is returned to the above-described process of step S55 in which the movement amounts of the front-left and the rear-right spherical wheels 3 are calculated and then their movement amounts are compared.

As described in the foregoing, according to the automatic guided vehicle 1 of the exemplary preferred embodiment of the invention, the spherical wheel 3 is used for support wheels of the automatic guided vehicle 1. Therefore, it is possible to stably turn even if there is no distance for run-up in a case when the automatic guided vehicle 1 travels along a curve or turns around on the spot.

In addition, according to the present preferred embodiment of the invention, the frame 5F of the drive unit 5 is mounted to the bottom part of the body such that the drive unit 5 is rotatable around the vertical axis of the body as shown in FIG. 6. The frame 5F is also allowed to rotate sideways at, for example but not limited to, about 10 degrees around the central axis 5G. Additionally, the pair of springs 5S is provided between the protrusion 5H of the frame 5F and each of the protrusions 2A of the body. Therefore, the frame 5F is directed to face in the direction of traveling after the rotation to absorb the misalignment between the drive unit 5 and the body when the body is turned, so as to avoid swinging. In addition, the coiled spring 5Sh absorbs the vertical oscillation of the body at the time of rotation of the steering wheels 5R and 5L.

Also, according to the present preferred embodiment, the amount of rotation of the spherical wheel 3 is measured optically by the spherical wheel sensor 10 and the spherical wheel sensor 10 is in non-contact with the spherical wheel 3, when the amount of rotation of the spherical wheel 3 is read. Therefore, it is possible to maintain a distance between the measurement surface of the ball 9 of the spherical wheel 3 and the spherical wheel sensor 10 at constant. In addition, since there is no generation of a slip caused by attachment of dust or the like according to the preferred embodiment of the invention, which may be caused in a mechanical type, it is possible to measure the amount of rotation of the spherical wheel 3, accurately.

Moreover, according to the present preferred embodiment, it is possible to freely change the direction of rotation and an angle of rotation by setting the center part of the bottom part of the body as the center, or selecting a desired portion of the bottom part of the body as the center of rotation. Furthermore, a vibration of the drive unit 5 is not transferred to the body of the automatic guided vehicle 1. Therefore, it is possible to reduce a loss of rotation of the automatic guided vehicle 1 utmost when the automatic guided vehicle 1 rotates, and also to adjust such that the drive unit 5 and the body are rotate integrally by stopping a state in which the drive unit 5 and the body are freely rotatable.

In addition, according to the present preferred embodiment, the amount of movement of the spherical wheel 3 is detected by the spherical wheel sensor 10 of the spherical wheels 3 arranged in the corners of the body on at least one diagonal line of the body, such as the front-left side and the rear-right side of the body in the direction of traveling. Therefore, it is possible to enhance accuracy of measurement of the amount of rotation of the spherical wheel 3 at the time when the body turns for example, and to promptly perform feedback operation of the steering wheels 5R and 5L with regard to a change in posture of the automatic guided vehicle 1.

Also, according to the present preferred embodiment, the auxiliary spherical wheel 3' is mounted to the drive unit 5. Because the auxiliary spherical wheel 3' supports a great stress acts upon the drive unit 5 and its attaching portion to the body when driving force of the forward movement or the backward movement of the automatic guided vehicle 1 is applied on the drive unit 5, motion of the drive unit 5 is suppressed. Accordingly, the damage on the bearing and so on is avoided, and the change in the position of the guiding line L and the position of the guide sensor 13, or a change in a distance therebetween, can be prevented.

Although the present invention has been described in terms of exemplary embodiments, it is not limited thereto. It should be appreciated that variations may be made in the embodiments described by persons skilled in the art without departing from the scope of the present invention as defined by the following claims. The limitations in the claims are to be interpreted broadly based the language employed in the claims and not limited to examples described in the present description or during the prosecution of the application, which examples are to be construed as non-exclusive. For example, in the present disclosure, the term "preferably", "preferred" or the like is non-exclusive and means "preferably", but not limited to.

## Claims

1. An automatic guided vehicle (1), comprising:
a body;
a pair of motors (5Rd, 5Ld);
spherical wheels (3) which are configured to support a load of the body, and which are freely capable of changing their direction of rolling;
a steering wheel unit (5) which is provided on the body to be rotable about a vertical axis and having a pair of steering wheels (5R, 5L) each being drivable by the motors, respectively, to move the body;
a spherical wheel sensor (10) provided on each of the spherical wheels and configured to detect optically movement of respective balls (9) in the spherical wheels;
a guide sensor (13) to detect a guide line provided on a floor surface on which the body is to be moved; and
a controlled (11) configured to receive a detection signal from the spherical wheel sensors and the guide sensor and controlling rotation of the motors,
**characterized in that**:
each spherical wheel comprises a semispherical housing attached to the body, the respective spherical wheel sensor is attached to the housing, and the respective ball is retained in the housing through bearings,
the bearings are disposed on positions of each apex point of an equilateral triangle in a horizontal plane along the floor surface, and
one of the spherical wheels is provided on a movable-side frame of the steering wheel unit, and the spherical wheel is disposed at a position deviated rightward or leftward from a central line of bilateral symmetry of the movable-side frame of the steering wheel unit.

2. An automatic guided vehicle (1) according to claim 1, wherein each spherical wheel sensor (10) is for measuring an amount of movement in an X-axis direction and a Y-axis direction, set along a floor surface of the body, of the respective spherical wheel (3), according to rotation of the spherical wheel (3).

3. An automatic guided vehicle (1) according to claim 1 or 2, wherein the spherical wheel (3) is provided in corners of the body.

4. An automatic guided vehicle (1) according to claim 1, 2 or 3, wherein the steering wheel unit (5) includes an auxiliary spherical wheel (3').

5. An automatic guided vehicle (1) according to any one of claims 1 to 4, wherein each spherical wheel sensor (10) is configured to optically measure the amount of movement of the respective spherical wheel (3) based on irradiation of light toward a surface of the ball (9) included in the spherical wheel (3) and reading of the light reflected from the surface of the ball (9).

6. An automatic guided vehicle (1) according to any one of claims 1 to 5, wherein the steering wheel unit (5) includes a first protrusion (5H), the body includes a pair of second protrusions (2A) arranged at both sides of the first protrusion (5H) of the steering wheel unit (5), and an impact absorption means (5S) is provided between the first protrusion (5H) and each of the second protrusions (2A) of the body, for absorbing misalignment between the steering wheel unit (5) and the body when the body is turned, so as to avoid swinging.

7. An automatic guided vehicle (1) according to any one of claims 1 to 6, wherein an impact absorption means (5Sh) is provided between the steering wheels unit (5) and the body, for absorbing vertical oscillation of the body at the time of rotation of the steering wheels (5R, 5L).

## Patentansprüche

1. Automatisch geführtes Fahrzeug (1), das aufweist:
einen Wagenkasten;
ein Paar Motoren (5Rd, 5Ld);
Kugelräder (3), die ausgebildet sind, um eine Last des Wagenkastens zu tragen, und die ungehindert ihre Rollrichtung ändern können;
eine Steuerradeinheit (5), die am Wagenkasten vorhanden ist, um sich um eine vertikale Achse drehen zu können, und die ein Paar Steuerräder (5R, 5L) aufweist, von denen ein jedes jeweils durch die Motoren angetrieben werden kann, um den Wagenkasten zu bewegen;
einen Kugelradsensor (10), der an jedem der Kugelräder vorhanden und ausgebildet ist, um die Bewegung von jeweiligen Kugeln (9) in den Kugelrädern optisch zu erfassen;
einen Führungssensor (13), um eine Führungslinie zu erfassen, die auf einer Bodenfläche vorhanden ist, auf der der Wagenkasten bewegt werden soll; und
einen Regler (11), der ausgebildet ist, um ein Erfassungssignal von den Kugelradsensoren und dem Führungssensor zu empfangen und die Drehung der Motoren zu steuern,
**dadurch gekennzeichnet, dass**:
ein jedes Kugelrad ein Halbkugelgehäuse aufweist, das am Wagenkasten befestigt ist, wobei der jeweilige Kugelradsensor am Gehäuse befestigt ist und die jeweilige Kugel im Gehäuse mittels Lagern festgehalten wird;
die Lager in Positionen eines jeden Scheitelpunktes eines gleichseitigen Dreieckes in einer horizontalen Ebene entlang der Bodenfläche angeordnet sind; und
eines der Kugelräder an einem Rahmen der beweglichen Seite der Steuerradeinheit vorhanden ist und das Kugelrad in einer Position angeordnet ist, die nach rechts oder links von einer Mittellinie der bilateralen Symmetrie des Rahmens der beweglichen Seite der Steuerradeinheit abweicht.

2. Automatisch geführtes Fahrzeug (1) nach Anspruch 1, bei dem ein jeder Kugelradsensor (10) für das Messen einer Größe der Bewegung in einer X-AchsenRichtung und einer Y-Achsen-Richtung vorhanden ist, die längs einer Bodenfläche des Wagenkastens des jeweiligen Kugelrades (3) entsprechend der Drehung des Kugelrades (3) eingestellt wird.

3. Automatisch geführtes Fahrzeug (1) nach Anspruch 1 oder 2, bei dem das Kugelrad (3) in den Ecken des Wagenkastens bereitgestellt wird.

4. Automatisch geführtes Fahrzeug (1) nach Anspruch 1, 2 oder 3, bei dem die Steuerradeinheit (5) ein Hilfskugelrad (3') umfasst.

5. Automatisch geführtes Fahrzeug (1) nach einem der Ansprüche 1 bis 4, bei dem ein jeder Kugelradsensor (10) ausgebildet ist, um die Größe der Bewegung des jeweiligen Kugelrades (3) auf der Basis der Lichteinstrahlung in Richtung einer Oberfläche der Kugel (9), die im Kugelrad (3) eingeschlossen ist, optisch zu messen und das von der Oberfläche der Kugel (9) reflektierte Licht abzulesen.

6. Automatisch geführtes Fahrzeug (1) nach einem der Ansprüche 1 bis 5, bei dem die Steuerradeinheit (5) einen ersten Vorsprung (5H) umfasst, wobei der Wagenkasten ein Paar zweite Vorsprünge (2A) umfasst, die auf beiden Seiten des ersten Vorsprunges (5H) der Steuerradeinheit (5) angeordnet sind, und wobei ein Stoßdämpfungsmittel (5S) zwischen dem ersten Vorsprung (5H) und einem jeden der zweiten Vorsprünge (2A) des Wagenkastens vorhanden ist, um eine Fehlausrichtung zwischen der Steuerradeinheit (5) und dem Wagenkasten aufzunehmen, wenn der Wagenkasten gedreht wird, um so ein Schwingen zu vermeiden.

7. Automatisch geführtes Fahrzeug (1) nach einem der Ansprüche 1 bis 6, bei dem ein Stoßdämpfungsmittel (5Sh) zwischen der Steuerradeinheit (5) und dem Wagenkasten vorhanden ist, um eine vertikale Schwingung des Wagenkastens zum Zeitpunkt der Drehung der Steuerräder (5R, 5L) aufzunehmen.

## Revendications

1. Véhicule à guidage automatique (1), comprenant :
une carrosserie ;
une paire de moteurs (5Rd, 5Ld) ;
des roues sphériques (3), configurées de sorte à supporter une charge de la carrosserie, et pouvant librement changer leur direction de roulement ;
une unité de roues directrices (5), agencée sur la carrosserie, de sorte à pouvoir tourner autour d'un axe vertical, et comportant une paire de roues directrices (5R, 5L), pouvant chacune être respectivement entraînée par les moteurs, pour déplacer la carrosserie ;
un capteur des roues sphériques (10), agencé sur chacune des roues sphériques et configuré de sorte à détecter optiquement le déplacement de billes respectives (9) dans les roues sphériques ;
un capteur de guidage (13) pour détecter une ligne de guidage établie sur une surface du sol sur laquelle la carrosserie doit être déplacée ; et
un moyen de commande (11), configuré de sorte à recevoir un signal de détection des capteurs des roues sphériques et du capteur de guidage et à contrôler la rotation des moteurs ;
**caractérisé en ce que** :
chaque roue sphérique comprend un boîtier semi-sphérique fixé sur la carrosserie, le capteur des roues sphériques respectif étant fixé sur le boîtier et la bille respective étant retenue dans le boiter par des paliers ;
les paliers sont agencés dans des positions de chaque point de sommet d'un triangle équilatéral, dans un plan horizontal le long de la surface du sol ; et
une des roues sphériques est agencée sur un cadre du côté mobile de l'unité de roues directrices, la roue sphérique étant agencée au niveau d'une position déviée vers la droite ou vers la gauche d'une ligne centrale à symétrie bilatérale du cadre du côté mobile de l'unité de roues directrices.

2. Véhicule à guidage automatique (1) selon la revendication 1, dans lequel chaque capteur des roues sphériques (10) sert à mesurer une distance de déplacement dans une direction de l'axe des X et dans une direction de l'axe des Y, le long d'une surface du sol de la carrosserie, de la roue sphérique respective (3), en fonction de la rotation de la roue sphérique (3).

3. Véhicule à guidage automatique (1) selon les revendications 1 ou 2, dans lequel la roue sphérique (3) est agencée dans les coins de la carrosserie.

4. Véhicule à guidage automatique (1) selon les revendications 1, 2 ou 3, dans lequel l'unité de roues directrices (5) englobe une roue sphérique auxiliaire (3').

5. Véhicule à guidage automatique (1) selon l'une quelconque des revendications 1 à 4, dans lequel chaque capteur des roues sphériques (10) est configuré de sorte à mesurer optiquement la distance de déplacement de la roue sphérique respective (3), sur la base de l'irradiation de la lumière vers une surface de la bille (9) incluse dans la roue sphérique (3) et de la lecture de la lumière réfléchie à partir de la surface de la bille (9).

6. Véhicule à guidage automatique (1) selon l'une quelconque des revendications 1 à 5, dans lequel l'unité de roues directrices (5) englobe une première protubérance (5H), la carrosserie englobant une paire de deuxièmes protubérances (2A), agencées au niveau des deux côtés de la première protubérance (5H) de l'unité de roues directrices (5), un moyen d'absorption des impacts (5S) étant agencé entre la première protubérance (5H) et chacune des deuxièmes protubérances (2A) de la carrosserie, pour absorber un désalignement entre l'unité de roues directrices (5) et la carrosserie lorsque la carrosserie est tournée, de sorte à empêcher un basculement.

7. Véhicule à guidage automatique (1) selon l'une quelconque des revendications 1 à 6, dans lequel un moyen d'absorption des impacts (5Sh) est agencé entre l'unité de roues directrices (5) et la carrosserie, pour absorber l'oscillation verticale de la carrosserie lors de la rotation des roues directrices (5R, 5L).
